# NEUE EUROPÄISCHE PATENTSCHRIFT

(11) **EP 0 528 874 B2**
(45) Veröffentlichungstag und Bekanntmachung des Hinweises auf die Entscheidung über den Einspruch: **17.10.2001**
(45) Hinweis auf die Patenterteilung: 12.07.1995
(21) Anmeldenummer: 91909030.8
(22) Anmeldetag: 08.05.1991
(51) Int. Cl.: C09J 175/04, C09D 175/04, C09J 163/00, C09D 163/00, H01B 3/30, H01B 3/40

(54) **Verwendung eines zweikomponentigen, filmbildungsfähigen Reaktionssystems auf Dispersionsbasis**
Use of a dispersion-based two-component, filmforming reactive system
L'utilisation d'un système reactif capable de former un film, à base de dispersion, comprenant deux composés

(30) Priorität: 17.05.1990 DE 4015858
(43) Veröffentlichungstag der Anmeldung: 03.03.1993
(73) Patentinhaber: Henkel Kommanditgesellschaft auf Aktien, 40191 Düsseldorf (DE)
(72) Erfinder: BOLTE, Gerd, D-4019 Monheim (DE); HENKE, Günther, D-4040 Neuss (DE); BRÜNINGHAUS, Ulrike, D-4006 Erkrath (DE)
(86) Internationale Anmeldenummer: EP9100861
(87) Internationale Veröffentlichungsnummer: WO9118071

(56) Entgegenhaltungen:
- EP-A- 0 000 568
- EP-A- 0 126 297
- EP-A- 0 201 715
- EP-A- 0 226 108
- EP-A- 0 285 898
- WO-A-90/06330
- GB-A- 2 019 425
- GB-A- 2 218 426
- US-A- 3 663 652
- US-A- 3 971 745
- US-A- 4 581 395
- US-A- 4 598 120
- US-A- 4 772 643
- US-A- 4 948 829

## Beschreibung

Die Erfindung betrifft die Verwendung eines zweikomponentigen, filmbildungsfähigen Reaktivsystems auf Basis wäßriger Dispersionen
- mindestens eines mit Epoxiden härtbaren Harzes (I) und
- von Epoxidverbindungen als Härter (II).

Derartige Reaktivsysteme sind bekannt: So wird in der EP 0 000 568 eine wäßrige Dispersion beschrieben, die einerseits Polyurethane mit endständigen primären oder sekundären Amino- oder Semicarbazid-Gruppen enthält sowie andererseits als Kettenverlängerungsmittel hydrophobe Bis-Epoxide. Von einem weiteren Harz auf der Basis von Acrylat- und/oder Methacrylat-Copolymeren ist ebenfalls keine Rede.

In der US 3 971 745 wird eine Emulsion von Polyurethanen mit Amino-Endgruppen im Gemisch mit Polyepoxiden beschrieben. Es wird zwar ein Polyacrylat hinzugefügt (siehe Spalte 8, Zeile 25), jedoch als Verdickungsmittel und nicht als Härterkomponente.

Gemäß der EP 0 285 898 A2 eignen sich zum Zurichten von vollnarbigen, geschliffenen oder gespaltenen Ledern wäßrige Zubereitungen, die als Bindemittel ein Copolymerisat aus monoolefinisch ungesättigten Monomeren mit einer Säurezahl von 5 bis 150 mg KOH/g Substanz und/oder ein Polyurethan mit einer Säurezahl von 5 bis 150 mg KOH/g Substanz und als Vernetzer ein Triglycidylisocyanurat mit einem Epoxidwert von 0,5 bis 1,01 enthalten.

Die EP 0 226 108 beschreibt eine wäßrige Zubereitung zum Zurichten von Leder und zur Textilbeschichtung auf der Basis von Carboxylgruppenhaltigen Polymeren, die gegebenenfalls Kasein als Bindemittel und eine 1,2-Polyepoxidverbindung als Vernetzer, sowie Pigmente, übliche Hilfsmittel und Zusatzstoffe enthalten.

Zur Herstellung von Laminaten und Verbunden, insbesondere jedoch für die Herstellung von Basismaterialien für flexible gedruckte Schaltungen, werden spezielle Klebstoffsysteme benötigt. Die Anforderungen an derartige Systeme sind sehr hoch, da zum einen schwierig zu verklebende Materialien wie z.B. Kupferfolien mit Polyimidfolien zu verbinden sind, andererseits die Verbunde flexibel sowie weitestgehend hitzeresistent sein sollen. Dem Fachmann sind für derartige Zwecke lösungsmittelhaltige Klebstoffsysteme auf Basis modifizierter Polyurethan-, Polyester-, Acrylat- und Epoxidharze bekannt. Neben der grundsätzlichen Lösungsmittelproblematik haben derartige Systeme oftmals den Nachteil, daß die Aushärtezeiten viel zu lang sind, z.B. bis zu 14 Tagen bei Polyurethanklebstoffsystemen, oder die Aushärtetemperaturen zu hoch sind, z.B. bis zu 240°C bei Epoxidharz- oder Acrylat-Systemen. Zur Beseitung der Lösungsmittelproblematik wurden wasserbasierte Systeme entwickelt. So sind aus der JP 87/153371 sowie aus der JP 85/118781 Klebstoffe für flexible gedruckte Schaltungen auf wäßriger Basis bekannt, die Dispersionen von Acrylat-(Co)-polymeren und von Epoxidverbindungen enthalten. Ein wesentlicher Nachteil derartiger Systeme sind die relativ langen Aushärtezeiten, z.B. 16 Stunden bei 130°C bei der JP 87/153371. Aus der JP 87/112676 sind wäßrige Polyurethanklebstoffe bekannt auf Basis Polyurethandispersionen (A) erhalten aus Polytetramethylenglykol (MG 400 bis 2000), einem organischen Diisocyanat und einer Dimethylolcarbonsäure sowie Hydrazin oder Dihydraziden als Kettenverlängerungsmittel neutralisiert mit tertiären Aminen und einer wasserlöslichen Verbindung (B) mit 2 oder mehr Epoxid- oder Aziridinringen pro Molekül. Wenn auch als Beispiel angeführt wird, daß verschiedene Folien mit diesem Klebstoff miteinander verbunden werden können, z.B. PET und Polypropylen, so findet der Fachmann keinen Hinweis darauf, daß sich derartige Klebstoffe für Heißsiegelbeschichtungen eignen könnten. Des weiteren finden sich keine Hinweise auf die Herstellung blockfesten Beschichtungen sowie auf die spezielle Verwendung zur Herstellung von flexiblen gedruckten Schaltungen.

Aufgabengemäß sollen wasserbasierte Reaktivsysteme zur Verfügung gestellt werden, die in der Lage sind, auch bei schwierig zu verbindenden Substraten wie Polyimiden hohe Haftfestigkeiten zu erreichen. Darüber hinaus soll eine hohe Flexibilität, ein hoher Isolationswiderstand, eine hohe Temperaturstabilität sowie eine gute Lötbadbeständigkeit gewährleistet sein. Die Aushärtezeit soll relativ kurz und die Aushärtetemperatur unter 200°C liegen. Des weiteren soll die besondere Forderung der Blockfestigkeit erfüllt werden können. Darunter ist die Nicht-Klebrigkeit eines Films bei üblichen Raum- und Lagertemperaturen zu verstehen, der durch Beschichtung eines Substrats mit dem erfindungsgemäßen Reaktivsystem und anschließendem Trocknen hergestellt wurde. Es soll darüber hinaus eine neue Rohstoffbasis bzw. eine andere Polymerenklasse als Ausgangsmaterial für derartige Systeme erschlossen werden.

Die Aufgabe wurde erfindungsgemäß gelöst durch die Verwendung eines zweikomponentigen, filmbildungsfähigen Reaktivsystems auf Basis wäßriger Dispersionen mindestens eines mit Epoxiden härtbaren Harzes (I) und von Epoxidverbindungen als Härter (II), wobei als härtbares Harz (la) Polyurethanpolymere mit Carboxyl- und/oder Hydroxyl-Gruppen als gegenüber Epoxiden reaktiven funktionellen Gruppen und als weiteres härtbares Harz (Ib) wäßrige Dispersionen von Acrylat- und/oder Methacrylat-Homo- oder -Copolymeren mit Carboxyl- und/oder Methylolgruppen enthalten sind, zum flächigen Verbinden von Substraten nach dem in-line- oder off-line-Verfahren.

Das erfindungsgemäß verwendbare zweikomponentige Reaktivsystem erhält also Dispersionen eines mit Epoxiden härtbaren Harzes (I) sowie dispergierte Epoxidverbindungen als Härter (II). Im Unterschied zu den weiter oben genannten beiden japanischen Anmeldungen besteht das in (I) enthaltene härtbare Harz (la) aus Polyurethanpolymeren mit gegenüber Epoxiden reaktiven funktionellen Gruppen. Als reaktive funktionelle Gruppen sind Carboxyl- und/oder Hydroxylgruppen geeignet. Bevorzugt sind Carboxylgruppen. Derartig modifizierte Polyurethanpolymere sind dem Fachmann bekannt.

Grundsätzlich gibt es eine Vielzahl von Grundstoffen, die für die Herstellung von Polyurethanen geeignet sind. Grob lassen diese sich in die sogenannte Polyolkomponente und die sogenannte Isocyanatkomponente unterteilen. Bei den Polyolen sind Polyesterpolyole, Polyetherpolyole und Polyesterpolyetherpolyole von besonderer Bedeutung. Im Sinne der Erfindung werden Polyurethane auf Basis von Polyesterpolyolen bevorzugt. Diese erhält man im allgemeinen durch Umsetzung mehrfunktioneller Alkohole mit mehrfunktionellen Carbonsäuren. Geeignete Isocyanate zur Herstellung von Polyurethanen sind beispielsweise aliphatische, aromatische und/oder alicyclische mehrfunktionelle Isocyanate. Exemplarisch seien 4,4'-Diphenylmethandiisocyanat (MDI), Isophorondiisocyanat (IPDI), Toluylendiisocyanat (TDI) und Tetramethylxyloldiisocyanat (TMXDI) genannt. Weitere Hinweise zu dem breiten Spektrum an geeigneten Polyol- und Isocyanatkomponenten kann der Fachmann der einschlägigen Fach- und Patentliteratur zu Polyurethanen entnehmen, so beispielsweise der veröffentlichten europäischen Anmeldung 354 471. Auch der dort angeführte Schritt der Kettenverlängerung ist möglich. Allerdings sollten, ebenfalls aus den dort angeführten Gründen der physiologischen Unbedenklichkeit, keine Kettenverlängerungsmittel eingesetzt werden, die physiologisch bedenklich sind wie beispielsweise Hydrazin, Diaminodiphenylmethan oder die Isomeren des Phenyldiamins sowie die Carbohydrazide oder Hydrazide von Dicarbonsäuren.

Auch die Einführung der genannten, gegenüber Epoxiden reaktiven funktionellen Gruppen in das Polymergerüst ist dem Fachmann prinzipiell bekannt. So sind beispielsweise hydroxylgruppenhaltige Polyurethane dadurch zu erhalten, daß bei der Umsetzung von Polyol- und Isocyanatkomponente ein Verhältnis von OH- zu NCO-Gruppen gewählt wird, das größer 1 ist. Carboxylgruppen lassen sich z.B. einfügen, indem man der Polyolkomponente vor Umsetzung mit der Isocyanatkomponente einen Teil an Dihydroxycarbonsäuren zufügt. Weitere Hinweise zur Einführung derartiger funktioneller Gruppen, insbesondere der im Sinne der Erfindung besonders bevorzugten Carboxylgruppen lassen sich ebenfalls der bereits genannten veröffentlichten europäischen Anmeldung entnehmen.

Die geeigneten Polyurethanpolymeren können auch unterschiedliche gegenüber Epoxiden reaktive Gruppen enthalten. Geeignet sind jedoch insbesondere solche, bei denen die Summe aus Säurezahl und OH-Zahl im Mittel 0,1 bis 40 beträgt. Besonders geeignet sind Polyurethanpolymere, bei denen die genannte Summe im Bereich von 0,3 bis 20 liegt. Bevorzugt wird ein Bereich von 0,5 bis 5. Es werden grundsätzlich solche Polyurethane erfindungsgemäß bevorzugt, die jeweils mindestens im Mittel zwei gegenüber Epoxiden reaktive funktionelle Gruppen enthalten. Bei derartigen Polymeren sind jene in besonderer Weise geeignet, bei denen diese reaktiven Gruppen endständig angeordnet sind. Bezüglich der anwendungstechnischen Eigenschaften, insbesondere der Flexiblität und Haftfestigkeit, werden bevorzugt Polyurethane eingesetzt, die ein mittleres Molekulargewicht von etwa 7.000 bis 50.000 aufweisen. Besonders gute Ergebnisse werden mit Polyurethanen mit einem mittleren Molekulargewicht im Bereich von 10.000 bis 30.000 erreicht. Mit mittlerem Molekulargewicht ist in diesem Zusammenhang sowie im folgenden das Gewichtsmittel gemeint.

Geeignete Epoxidverbindungen sind dem Fachmann aus der Patentliteratur und auch aus Enzyklopädien bekannt. So ist z.B. im Ullmann, Enzyklopädie der technischen Chemie, 4. Auflage, Band 10, Verlag Chemie, Weinheim/Bergstraße 1974, S. 563 ff. ausführlich die Herstellung von Epoxiden, deren Eigenschaften und Verwendung beschrieben. Zu den technisch wichtigsten Epoxidverbindungen zählen solche auf Basis von Bisphenol-A und/oder Novolak. Neben diesen sind auch heterocyclische Epoxide besonders geeignet. Erfindungsgemäß werden Epoxidharzdispersionen eingesetzt. Prinzipiell sind alle dispergierbaren Epoxidharze geeignet. Dies gilt sowohl für emulgatorhaltige Dispersionen, als auch für entsprechende selbstemulgierende Systeme. Auch Epoxidverbindungen wie Triglycidylisocyanorat, Polyethylenglycoldiglycidylether oder Sorbitolpolyglycidylether sind geeignet. Anstelle der dispergierbaren Epoxidharze können ganz oder teilweise auch wasserlösliche Epoxidverbindungen eingesetzt werden. Die erfindungsgemäß geeigneten Epoxide enthalten bevorzugt im Mittel mindestens zwei Epoxygruppen. Besonders bevorzugt sind Epoxidverbindungen mit einem Epoxidäquivalent im Bereich von 100 bis 4.000. Dabei wird unter einem Epoxidäquivalent die Menge in Gramm verstanden, die ein Mol Epoxid enthält. Besonders gute Ergebnisse werden mit Epoxidverbindungen erthalten, bei denen dieser Wert zwischen 150 und 600 liegt.

Gemäß der Erfindung enthält die verwendete Dispersion eines mit Epoxiden härtbaren Harzes (I) neben den bereits näher beschriebenen Polyurethanen (la) als weiteres härtbares Harz (Ib) Acrylat- und/oder Methacrylat-Homo- oder -Copolymere mit Carboxyl- und/oder Methylolgruppen in dispergierter Form. Derartig modifizierte (Meth-)Acrylatpolymere sind dem Fachmann bekannt. Für die Herstellung derartiger Polymere seien als geeignete (Meth-)Acrylate beispielhaft Acrylsäure und Methacrylsäure sowie deren Salze und Ester genannt. Vorzugsweise enthält die Alkoholkomponente dieser Ester 1 bis 6 C-Atome. Bei den erfindungsgemäß eingesetzten Polymerdispersionen bzw. -emulsionen kann der Fachmann zweckmäßigerweise auf solche zurückgreifen, die durch Emulsionspolymerisation hergestellt wurden. Selbstverständlich können die genannten Monomeren auch mit anderen ethylenisch ungesättigten Monomeren (co)polymerisiert werden soweit diese copolymerisierbar sind. Derartig geeignete Monomere sind alle diejenigen, die ethylenisch ungesättigte bzw. vinylische Gruppen enthalten.

Zu den Vinylverbindungen zählen z.B. das Vinylchlorid sowie die Vinylester wie Vinylacetat, Vinylpropionat aber auch Vinylfettsäureester wie Vinyllaurat und desweiteren Vinylalkohol. Geeignete Styrolverbindungen sind Styrol, Halogenstyrole wie Chlorstyrol, Fluorstyrol und Jodstyrol, Alkylstyrole wie Methylstyrol und 2,4-Diethylstyrol, Cyanostyrole, Hydroxystyrole, Nitrostyrole, Aminostyrole und/oder Phenylstyrole. Zu den geeigneten Derivaten der Acrylverbindungen zählt beispielsweise auch Acrylnitril. Die in den vorstehend beschriebenen Polymeren enthaltenen Carboxylgruppen lassen sich beispielsweise durch die Mitverwendung von Acrylsäure und/oder Methacrylsäure als Monomere bei der Polymerisation einfügen. Methylolgruppen erhält man beispielsweise durch die Mitverwendung von Hydroxystyrolen oder durch Einpolymerisieren von Vinylacetat und anschließender Verseifung.

Wie bereits erwähnt, ist dem Fachmann seit langem bekannt, daß derartige Monomere sich unter den Bedingungen der Emulsionspolymerisation in einem wäßrigen Medium zu Polymeren addieren lassen wie beispielsweise im genannten Ullmann, Band 19, S. 11-21, S. 132 ff. und S. 370-373 sowie in Encyclopedia of Polymer Science and Engineering, Volume 6, Wiley & Sons, New York 1986, S. 1-51 beschrieben. Zu den geeigneten Monomeren zählen z.B. Vinylverbindungen, die bereits angeführten Acrylate sowie entsprechende Derivate.

Als geeignet verwendbare Polymere im Sinne der Erfindung seien beispielsweise (Meth)acryl-Styrol-Acrylnitril-Copolymere oder Butylmethacrylat-Acrylnitril-Copolymere genannt. Geeignet sind auch die Homopolymeren der Acrylsäure sowie der Methacrylsäure. Besonders bevorzugt werden vorstehend beschriebene Polymere, wenn sie ein mittleres Molekulargewicht von 50.000 bis 300.000 aufweisen. Im Sinne der Erfindung bevorzugt sind solche Homo- oder Copolymeren, deren Summe von Säurezahl und OH-Zahl im Bereich von 1 bis 40 liegt. Besonders gute Ergebnisse weisen die genannten Polymeren auf, wenn diese Summe zwischen 3 und 15, insbesondere jedoch im Bereich von 4 bis 10 liegt.

Eine besondere Bedeutung kommt hinsichtlich der anwendungstechnischen Ergebnisse dem Verhältnis der härtbaren Harze zu. Das Gewichtsverhältnis der härtbaren Harze (la) zu (Ib) im Sinne der Erfindung liegt im Bereich von 99 : 1 bis 20 : 80. Grob gesagt gilt dabei die Regel, daß mit erhöhtem Polyurethananteil der aus dem Reaktivsystem entstehende Film flexibler wird, während durch Erhöhung des Anteils des anderen härtbaren Harzes die Temperaturstabilität begünstigt wird. Schon ein relativ kleiner Anteil an (Ib) führt zu deutlich verbesserten Werten hinsichtlich der letztgenannten Eigenschaft. Ein bevorzugter Bereich liegt deshalb zwischen 99 : 1 bis 25 : 75. Ein besonders optimaler und deshalb bevorzugter Bereich von (la) zu (Ib) liegt zwischen 98 : 2 bis 50 : 50. Die genannten Verhältnisse beziehen sich auf den Festkörpergehalt der Dispersion.

Ebenfalls von besonderer Bedeutung ist das Verhältnis von härtbarem Harz (I) zu Härter (II). Die Verhältnisse der einzelnen Komponenten zueinander sowie die Spezifikation dieser Komponenten beeinflussen selbstverständlich im gegenseitigen Wechselspiel die anwendungstechnischen Eigenschaften der erfindungsgemäßen Reaktivsysteme bzw. der daraus gebildeten Filme. So lassen sich über das Verhältnis der Mengen der einzelnen Komponenten sowie der Molekulargewichte und Funktionalitäten der Komponenten Reaktivsysteme innerhalb eines breiten Spektrums anwendungstechnischer Eigenschaften formulieren. So können sowohl Formulierungen mit einer hohen Anfangsklebrigkeit als auch solche, die eine besonders blockfeste Beschichtung ergeben komponiert werden. Das Gewichtsverhältnis von Harz (I) zu Härter (II) kann daher in einem bevorzugten Bereich von 1 : 5 bis 10 1 variieren. Insbesondere ist ein Bereich von 1 : 1 bis 5 : 1 bevorzugt, in dem optimale Resultate erzielt werden.

In einer besonderen Ausführungsform der Erfindung können in den verwendeten Reaktivsystemen neben den Dispersionen von Harz (I) und Härter (II) auch übliche Zusatzstoffe bis zu einer Gesamtmenge von 30 Gew.-%, bezogen auf den Gesamtfestkörpergehalt des Reaktivsystems, enthalten sein. Einige übliche Zusatzstoffe werden im folgenden beispielhaft angeführt. Es können Katalysatoren wie beispielsweise tertiäre Amine oder Phosphorsäure bzw. deren Derivate enthalten sein, vorzugsweise bis zu 1 Gew.-%. Haftvermittler wie Silane, Titanate und Zirkonate können einen Anteil bis zu 1 Gew.-% aufweisen. Um die Oberfläche bei der Filmbildung lange offen zu halten, können hochsiedende Lösungsmittel bis zu 5 Gew.-% zugesetzt werden. Entschäumer und Benetzungshilfen sind üblicherweise bis zu 2 Gew.-% enthalten. Als Vernetzer bzw. Benetzungshilfe können beispielsweise Säureanhydride oder auch Styrol-Maleinsäureanhydrid-Harze bis zu 10 Gew.-% enthalten sein. Für besondere Anforderungen kann ein Flexibilisator, beispielsweise NBR-Kautschuk mit einem Molekulargewicht von 30.000 und 200.000 bis zu 10 Gew.-% zugesetzt werden. Als Weichmacher können Polyester mit einem mittleren Molekulargewicht von etwa 600 bis 15.000 oder auch Glykolether bis zu 5 Gew.-% enthalten sein. Weitere mögliche Zusatzstoffe wie Flammschutzmittel, Konservierungsmittel usw. sowie deren wirksame Mengen sind dem Fachmann aus der Literatur bekannt und werden hier nicht weiter aufgeführt. Auch die vorstehend gemachten Gewichtprozentangaben beziehen sich auf den Gesamtfestkörpergehalt des Reaktivsystems. Dieser liegt vorzugsweise im Bereich von 30 Gew.-% bis 75 Gew.-%, insbesondere im Bereich von 40 Gew.-% bis 65 Gew.-%.

Mittels der erfindungsgemäß verwendeten Reaktivsysteme lassen sich klebstoffbeschichtete Substrate herstellen, wie sie beispielsweise zur Herstellung flexibler gedruckter Schaltungen geeignet sind. Dabei wird so vorgegangen, daß das Reaktivsystem nach innigem Vermischen der Dispersionen von Harzen (I) und Härter (II) auf das Substrat, beispielsweise eine Metallfolie wie Kupferfolie, aufgetragen wird. Dies kann durch Walzen, Sprühen, Streichen, Rakeln oder Tauchen vorgenommen werden. Die Schichtticke des aufgetragenen Reaktivsystems beträgt dabei im allgemeinen 15 bis 40 µm. Bevorzugt ist eine Schichtdicke von 20 bis 25 µm. Anschließend wird das so beschichtete Substrat bei einer Temperatur getrocknet, die unterhalb der Reaktivierungstemperatur liegt. Die Trocknungstemperatur sollte also 120°C nicht oder nicht wesentlich überschreiten. Die Trocknung kann beispielsweise in üblichen Trockenkanälen erfolgen. Bei einem gängigen Trockenkanal von 4 m Länge kann beispielsweise bei Temperaturen von 120°C und einem Durchsatz von etwa 4000 m³ Luft pro Stunde bei der erfindungsgemäßen Beschichtung von Folien mit Foliengeschwindigkeiten von 5 bis 10 Meter pro Minute gearbeitet werden. Man erhält so ein klebstoffbeschichtetes Substrat welches blockfest ist, d.h. bei normalen Lager- und Raumtemperaturen nicht klebrig ist.

Gegenüber dem bisherigen Stand der Technik bieten derartige blockfeste Systeme den Vorteil, daß zur Lagerung das Substrat auf der beschichteten Seite nicht durch eine zusätzliche Schutzfolie abgedeckt werden muß. Erfindungsgemäß beschichtete Folien können so in Form von schutzschicht- bzw. deckfolienfreien Rollen gelagert werden. Bei der Weiterverwendung dieser erfindungsgemäß hergestellten beschichteten Substrate entfällt somit auch der Arbeitsschritt des Entfernens der Schutz- bzw. Abdeckfolie. Derartig erfindungsgemäß beschichtete Substrate können in einem Verfahren zur Herstellung von Laminaten bzw. Verbunden weiterverarbeitet werden. Dazu werden diese mit einem weiteren Substrat heißverpreßt. Darunter versteht man, daß das klebstoffbeschichtete Substrat durch Hitze reaktiviert wird und durch Druck mit dem anderen Substrat flächig verbunden wird und anschliessend die Aushärtung erfolgt. Der Preßdruck beim Vorgang des Heißverpressens liegt maschinenabhängig und abhängig von den herzustellenden Laminaten bzw. Verbunden üblicherweise im Bereich von 5 bis 200 bar. Die Einstellung des für die jeweilige Kombination optimalen Drucks liegt im Erfahrungsbereich des Fachmanns.

Reaktivierung und Aushärtung erfolgen vorzugsweise bei Temperaturen zwischen 100 °C bis 170 °C. Ein weiterer Vorteil der Erfindung liegt hier in den geringen Aushärtezeiten, die im Bereich von 30 bis 60 Minuten liegen können.

Selbstverständlich können die erfindungsgemäß verwendeten Reaktivsysteme auch zur in-line-Herstellung von Laminaten bzw. Verbunden verwendet werden. Hierbei entfällt die Zwischenlagerung. Vielmehr werden nach dem Beschichten und Trocknen des aufgetragenen Reaktivsystems, die Substrate unmittelbar anschließend (in-line) üblicherweise unter Temperatur- (60 °C bis 170°C) und Druckeinwirkung flächig miteinander verbunden und das Reaktivsystem gehärtet, vorzugweise bei etwa 60 °C bis 170°C. Es entfällt hier also der Schritt der Zwischenlagerung des beschichteten Substrats (off-line-Verfahren). Sowohl für das in-line- als auch für das off-line-Verfahren gilt selbstverständlich, daß auch Laminate bzw. Verbunde mit mehr als zwei Substraten hergestellt werden können, wobei diese aus unterschiedlichsten Materialien bestehen können. Bei der in-line-Kaschierung kann der Fachmann das Verhältnis der Harze (la) und (Ib) untereinander sowie zu der Härterkomponente wie bereits beschrieben so wählen, daß das erfindungsgemäß verwendete Reaktivsystem eine etwas höhere Anfangsklebrigkeit aufweist. Dies geht zwar oftmals zu Lasten der Blockfestigkeit, welche jedoch bei dem in-line-Verfahren keine Rolle spielt.

Die erfindungsgemäß verwendeten Reaktivsysteme sind also in besonderer Weise geeignet zur Herstellung von mehrschichtigen Verbunden bzw. Laminaten. Die Substrate können dabei Metallfolien, Kunststoffolien, Gewebe, Vliese, Spezialpapiere und/oder Kartons sein. Beispielhaft seien als Metallfolien Kupfer-, Aluminium-, Blei- und Konstantanfolien aufgeführt. Als Kunststoffolien gut geeignet sind Folien auf Basis von Polyethylenterephthalat (PETP), Polyimid (Pl), Polycarbonat (PC), Polyesteretherketon (PEEK) und sogenannte liquid cristal polymers (LCP). Desweiteren sind beispielsweise Gewebe aus PETP oder Polyamid (PA) gut geeignet. Als Vliese können solche aus PETP oder Polyaramid eingesetzt werden. Bei den Spezialpapieren und Kartons sind solche auf Basis von Polyaramid oder Preßspan ebenfalls gut geeignet.

Erfindungsgemäß beschichtete Kupferfolien ergeben unter Einfluß von Wärme und Druck in der beschriebenen Weise mit anderen flexiblen Substraten wie Kapton^{R} oder Polyesterfolie Verbunde, die zur Herstellung flexibler, gedruckter Schaltungen geeignet sind. Die derartige Weiterverarbeitung heißsiegelbeschichteter Folien wird als Trockenkaschierung bezeichnet.

Die erfindungsgemäß verwendeten Reaktivsysteme ergeben nach thermischer Aushärtung Filme, die in den genannten Laminaten bzw. Verbunden hohe mechanische, thermische und chemische Stabilität aufweisen. Die erfindungsgemäß verwendeten Reaktivsysteme sind neben der Herstellung von hochtemperaturbeständigen flexiblen gedruckten Schaltungen auch für die Herstellung von hochtemperaturbeständigen Isoliermaterialien verwendbar. Unter Isoliermaterialien werden hier insbesondere Kabelumwicklungen, Abdeckfolien für Schaltungen und Wicklungen für Spulen verstanden.

Die Erfindung wird im folgenden anhand bevorzugter Ausführungsbeispiele näher erläutert.

### Beispiele

### Beispiel 1

Das Reaktivsystem auf wäßriger Basis enthält in dispergierter Form
- 5 GT: eines carboxylgruppenhaltigen Polyesterurethans mit einem mittleren Molekulargewicht von etwa 25.000 und einer Säurezahl von 0,7 ± 0,3
- 5 GT: eines Methylmethacrylat-Butylmethacrylat-Acrylnitril-Copolymeren mit einem mittleren Molekulargewicht von etwa 100.000 und einer Säurezahl von 5,5 ± 0,5 sowie
- 5 GT: eines Epoxids auf Basis Bisphenol-A mit einem Epoxidäquivalent von etwa 500

Die obengenannte Rezeptur ergibt nach der Trocknung bei ca. 120°C blockfeste Filme.

### Beispiel 2

Das Reaktivsystem auf wäßriger Basis enthält in dispergierter Form
- 31 GT: eines carboxylgruppenhaltigen Polyurethans mit einem mittleren Molekulargewicht von etwa 25.000 und einer Säurezahl von 0,7 ± 0,3
- 8 GT: eines carboxylgruppenhaltigen Polyurethans mit einem mittleren Molekulargewicht von etwa 10.000 und einer Säurezahl von 0,7 ± 0,3
- 1 GT: eines Methylmethacrylat-Butylmethacrylat-Acrylnitril-Copolymeren mit einem mittleren Molekulargewicht von etwa 100.000 und einer Säurezahl von 5,5 ± 0,5 sowie
- 5 GT: eines Epoxids auf Basis Bisphenol-A mit einem Epoxidäquivalent von etwa 500
- 5 GT: eines Epoxids auf Basis Bisphenol-A mit einem Epoxidäquivalent von 170

Dieses Reaktivsystem ergibt nach Trocknung eine Beschichtung mit hoher Anfangsklebrigkeit und eignet sich sich insbesondere für inline-Kaschierungen.

Die Mengenangaben in Beispiel 1 und 2 beziehen sich auf den jeweiligen Festkörpergehalt. GT = Gewichtsteile

### Beispiel 3

Auf eine Kupferfolie von 35 µm wurde ein Reaktivsystem nach Beispiel 1 mit einer Dicke von 20 - 25 µm aufgegeben. Nach der Trocknung bei 120°C ergab sich ein 20 µm dicker geschlossener blockfreier Klebstoffilm.

### Beispiel 4

Die beschichtete Kupferfolie nach Beispiel 3 wurde gegen eine 23 µm starke Polyethylenterephthelatfolie bei 140°C kaschiert. Beim Test auf Verbundhaftung kam es zum Materialriß. Beim Test auf Temperatur-Stabilität zeigte sich nach 1 Tag bei 155°C weder Delamination noch Blasenbildung. Nach einer halbstündigen Temperung bei 170°C wurde eine Lötbadbeständigkeit über 45 Sekunden bei 230 ° C festgestellt.

### Beispiel 5

Die beschichtete Kupferfolie nach Beispiel 3 wurde gegen eine 50 µm starke Kapton^{R}-Folie bei 170°C kaschiert. Beim Test auf Verbundhaftung kam es zu Materialriß. Beim Test auf Temperatur-stabilität zeigte sich nach einem Tag bei 220°C keine Delamination oder Blasenbildung. Nach einer halbstündigen Temperung bei 170°C wurde eine Lötbadbeständigkeit über 60 Sekunden bei 288°C festgestellt.

### Beispiel 6

Eine Polyesterfolie wurde mit einem Reaktivsystem gemäß Beispiel 1 beschichtet, getrocknet und anschließend mit einer Polyaramidfolie bei 140°C kaschiert. Der Test auf Verbundhaftung ergab Materialriß. Beim Test auf Temperaturbeständigkeit zeigte sich nach 1 Tag bei 155°C weder Delamination noch Blasenbildung.

### Beispiel 7

Eine Polyesterfolie wurde mit einem Reaktivsystem nach Beispiel 1 beschichtet und nach dem Trocknen mit einem Preßspansubstrat heißverpreßt. Auch hier wurde beim Test auf Verbundhaftung Materialriß erhalten. Beim Test auf Temperaturstabilität ergab sich nach einem Tag bei 130°C weder eine Ablösung der Substrate noch eine Blasenbildung.

## Patentansprüche

1. Verwendung eines zweikomponentigen, filmbildungsfähigen Reaktivsystemes auf Basis wäßriger Dispersionen
- mindestes eines mit Epoxiden härtbaren Harzes (I) und
- von Epoxidverbindungen als Härter (II),
wobei als härtbares Harz (la) Polyurethanpolymere mit Carboxyl- und/oder Hydroxyl-Gruppen als gegenüber Epoxiden reaktiven funktionellen Gruppen und als weiteres härtbares Harz (Ib) wäßrige Dispersionen von Acrylat- und/oder Methacrylat-Homo- oder - Copolymeren mit Carboxyl- und/oder Methylolgruppen enthalten sind, zum flächigen Verbinden von Substraten nach dem in-line- oder off-line-Verfahren.

2. Verwendung nach Anspruch 1, **dadurch gekennzeichnet, daß** das Gewichtsverhältnis der härtbaren Harze (la) zu (Ib) im Bereich von 98 : 2 bis 50 : 50 liegt.

3. Verwendung nach einem der vorstehenden Ansprüche, **dadurch gekennzeichnet, daß** das Gewichtsverhältnis von härtbarem Harz (I) zu Härter (II) im Bereich von 1 : 5 bis 10 : 1 liegt.

4. Verwendung nach einem der vorstehenden Ansprüche, **dadurch gekennzeichnet, daß** das Gewichtsverhältnis von härtbarem Harz (I) zu Härter (II) im Bereich 1 : 1 bis 5 : 1 liegt.

5. Verwendung nach einem der vorstehenden Ansprüche, **dadurch gekennzeichnet, daß** die den gegenüber Epoxiden reaktiven funktionellen Gruppen der Polyurethanpolymere Carboxylgruppen sind.

6. Verwendung nach einem der vorstehenden Ansprüche, **dadurch gekennzeichnet, daß** die Polyurethanpolymeren ein mittleres Molekulargewicht von 7.000 bis 50.000, insbesondere von 10.000 bis 30.000, aufweisen.

7. Verwendung nach einem der vorstehenden Ansprüche, **dadurch gekennzeichnet, daß** die Polyurethanpolymere jeweils mindestens im Mittel zwei gegenüber Epoxiden reaktive funktionelle Gruppen enthalten.

8. Verwendung nach einem der vorstehenden Ansprüche, **dadurch gekennzeichnet, daß** die Summe von Säurezahl und OH-Zahl der Polyurethanpolymeren im Mittel 0,1 bis 40, insbesondere 0,3 bis 20, vorzugsweise 0,5 bis 5, beträgt.

9. Verwendung nach einem der vorstehenden Ansprüche, **dadurch gekennzeichnet, daß** die Acrylat- und/oder Methacrylat-Homo- und/oder
- Copolymeren ein mittleres Molekulargewicht von 50.000 bis 300.000 aufweisen.

10. Verwendung nach einem der vorstehenden Ansprüche, **dadurch gekennzeichnet, daß** die Acrylat- und/oder Methacrylat-Homo- und/oder
- Copolymeren eine Summe von Säurezahl und OH-Zahl im Bereich von 1 bis 40, insbesondere 3 bis 15, vorzugsweise 4 bis 10, aufweist.

11. Verwendung nach einem der vorstehenden Ansprüche, **dadurch gekennzeichnet, daß** die Epoxidverbindungen ein Epoxidäquivalent im Bereich von 100 bis 4.000, insbesondere 150 bis 600, aufweisen.

12. Verwendung nach einem der vorstehenden Ansprüche, **dadurch gekennzeichnet, daß** zumindest überwiegend Epoxidverbindungen auf Basis Bisphenol-A, Novolak und/oder heterocyclische Epoxide enthalten sind.

13. Verwendung nach einem der vorstehenden Ansprüche, **dadurch gekennzeichnet, daß** sie neben den Dispersionen von Harz (I) und Härter (II) aus üblichen Zusatzstoffen wie Katalysatoren, Haftvermittler, Lösungsmittel, Benetzungsvermittler, Entschäumer, Weichmacher bis zu einer Gesamtmenge von 30 Gew.-%, bezogen auf den Gesamtfestkörpergehalt des Reaktivsystems, bestehen.

14. Verwendung nach mindestens einem der Ansprüche 1 bis 13, **dadurch gekennzeichnet, daß** ein Reaktivsystem nach Ansprüchen 1 bis 13 nach innigem Vermischen der Dispersionen von Harzen (I) und Härter (II) auf das Substrat durch Walzen, Sprühen, Streichen, Rakeln oder Tauchen aufgetragen und anschließend bei maximal 120°C getrocknet wird und so ein bei Raumtemperatur blockfestes, hitzereaktivierbares, klebstoffbeschichtetes Substrat hergestellt wird.

15. Verwendung nach mindestens einem der Ansprüche 1 bis 13, **dadurch gekennzeichnet, daß** das Reaktivsystem nach Ansprüchen 1 bis 13 auf mindestens eines der zu verbindenden Substrate aufgetragen wird, diese unmittelbar anschließend flächig miteinander verbunden werden und die Härtung bei etwa 60°C bis 170°C erfolgt und so ein Laminat hergestellt wird.

16. Verwendung nach mindestens einem der Ansprüche 1 bis 14, **dadurch gekennzeichnet, daß** nach Anspruch 14 hergestellte beschichtete Substrate mit mindestens einem weiteren Substrat durch Reaktivierung und anschließende Aushärtung der Beschichtung bei etwa 100 °C bis 170 °C flächig miteinander verbunden werden und so Laminate hergestellt werden.

17. Verwendung der Reaktivsysteme nach Ansprüchen 1 bis 13 zur Herstellung von mehrschichtigen Verbunden aus Metallfolien, Kunstoffolien, Geweben, Vliesen, Spezialpapieren und/oder Kartons.

18. Verwendung der Reaktivsysteme nach Ansprüchen 1 bis 13 zur Herstellung von hochtemperaturbeständigen flexiblen gedruckten Schaltungen und Elektroisoliermaterialien wie Kabelumwicklungen, Abdeckfolien für Schaltungen und Wicklungen für Spulen.

## Claims

1. The use of a two-component film-forming reactive system based on aqueous dispersions containing
- at least one resin (I) curable with epoxides and
- epoxide compounds as curing agent (II),
polyurethane polymers containing carboxyl and/or hydroxyl groups as epoxide-reactive functional groups being present as a curable resin (la) and aqueous dispersions of acrylate and/or methacrylate homo- or copolymers containing carboxyl and/or methylol groups being present as a further curable resin (Ib), for the surface bonding of substrates by the in-line or off-line process.

2. The use claimed in claim 1, **characterized in that** the ratio by weight between the curable resins (la) and (Ib) is in the range from 98:2 to 50:50.

3. The use claimed in any of the preceding claims, **characterized in that** the ratio by weight of curable resin (I) to curing agent (II) is in the range from 1:5 to 10:1.

4. The use claimed in any of the preceding claims, **characterized in that** the ratio by weight of curable resin (I) to curing agent (II) is in the range from 1:1 to 5:1.

5. The use claimed in any of the preceding claims, **characterized in that** the epoxide-reactive functional groups of the polyurethane polymers are carboxyl groups.

6. The use claimed in any of the preceding claims, **characterized in that** the polyurethane polymers have an average molecular weight of 7,000 to 50,000 and, more particularly, 10,000 to 30,000.

7. The use claimed in any of the preceding claims, **characterized in that** the polyurethane polymers contain on average at least two epoxide-reactive functional groups.

8. The use claimed in any of the preceding claims, **characterized in that** the sum of acid value and OH value of the polyurethane polymers is, on average, 0.1 to 40, preferably 0.3 to 20 and, more preferably, 0.5 to 5.

9. The use claimed in any of the preceding claims, **characterized in that** the acrylate and/or methacrylate homopolymers and/or copolymers have an average molecular weight in the range from 50,000 to 300,000.

10. The use claimed in any of the preceding claims, **characterized in that** the acrylate and/or methacrylate homopolymers and/or copolymers have a sum of acid value and OH value in the range from 1 to 40, preferably in the range from 3 to 15 and, more preferably, in the range from 4 to 10.

11. The use claimed in any of the preceding claims, **characterized in that** the epoxide compounds have an epoxide equivalent in the range from 100 to 4,000 and more particularly in the range from 150 to 600.

12. The use claimed in any of the preceding claims, **characterized in that** epoxide compounds based on bisphenol A, novolak and/or heterocyclic epoxides are at least predominantly present.

13. The use claimed in any of the preceding claims, **characterized in that**, in addition to the dispersions of resin (I) and curing agent (II), they consist of typical additives, such as catalysts, coupling agents, solvents, wetting agents, foam inhibitors, plasticizers in a total quantity of up to 30% by weight, based on the total solids content of the reactive system.

14. The use claimed in at least one of claims 1 to 13, **characterized in that**, after thorough mixing of the dispersions of resins (I) and curing agent (II), the reactive system according to claims 1 to 13 is applied to the substrate by roll coating, spray coating, spread coating, knife coating or dip coating and is then dried at a maximum temperature of 120EC and a heat-reactivatable, adhesive-coated substrate resistant to blocking at room temperature is thus produced.

15. The use claimed in at least one of claims 1 to 13, **characterized in that** the reactive system according to claims 1 to 13 is applied to at least one of the substrates to be bonded, the substrates are joined to one another immediately afterwards and curing is carried out at approximately 60EC to 170EC and a laminate is thus produced.

16. The use claimed in at least one of claims 1 to 14, **characterized in that** the coated substrates produced by the process according to claim 14 are joined to at least one other substrate by reactivation and subsequent curing of the coating at around 100EC to 170EC and laminates are thus produced.

17. The use of the reactive systems claimed in claims 1 to 13 for the production of multilayer laminates of metal foils, plastic films, woven fabrics, nonwovens, special papers and/or paperboards.

18. The use of the reactive systems claimed in claims 1 to 13 for the production of high-temperature-resistant flexible printed circuits and electrical insulating materials, such as cable sheaths, cover films for circuits and windings for coils.

## Revendications

1. Utilisation d'un système réactif apte à la formation de film, à deux composants, à base de dispersions aqueuses de
- au moins une résine (I) durcissable avec des époxydes
- et de composés époxydiques comme durcisseurs (II),
selon laquelle on inclut comme résine durcissable (Ia) des polymères de polyuréthanne ayant des groupes carboxyle et/ou hydroxyle en tant que groupes fonctionnels réactifs vis-à-vis des époxydes et comme résine durcissable supplémentaire (Ib) des dispersions aqueuses d'homo- ou de copolymères d'acrylate et/ou de méthacrylate ayant des groupes carboxyle et/ou méthylol en vue de l'assemblage en surface de substrats selon le procédé en ligne (in line) ou en mode autonome (off line).

2. Utilisation selon la revendication 1,
**caractérisée en ce que**
le rapport pondéral de résines durcissables (Ia) à (Ib) se situe dans la zone allant de 98:2 à 50:50.

3. Utilisation selon l'une quelconque des revendications précédentes,
**caractérisée en ce que**
le rapport pondéral de la résine durcissable (I) au durcisseur (II) se situe dans la zone allant de 1:5 à 10:1.

4. Utilisation selon l'une quelconque des revendications précédentes,
**caractérisée en ce que**
le rapport pondéral de la résine durcissable (I) au durcisseur (II) se situe dans la zone allant de 1:1 à 5:1.

5. Utilisation selon l'une quelconque des revendications précédentes,
**caractérisée en ce que**
les groupes fonctionnels réactifs vis-à-vis des époxydes, des polymères de polyuréthanne sont des groupes carboxyles.

6. Utilisation selon l'une quelconque des revendications précédentes,
**caractérisée en ce que**
les polymères de polyuréthanne possèdent un poids moléculaire moyen de 7000 à 50 000, en particulier de 10 000 à 30 000.

7. Utilisation selon l'une quelconque des revendications précédentes,
**caractérisée en ce que**
les polymères de polyuréthannes renfermant respectivement au moins en moyenne deux groupes fonctionnels réactifs vis-à-vis des époxydes.

8. Utilisation selon l'une quelconque des revendications précédentes,
**caractérisée en ce que**
la somme de l'indice d'acidité et de l'indice d'hydroxyle des polymères de polyuréthanne s'élève en moyenne de 0,1 à 40, en particulier de 0,3 à 20 et de préférence de 0,5 à 5.

9. Utilisation selon l'une quelconque des revendications précédentes,
**caractérisée en ce que**
les homo- et/ou copolymères d'acrylate et/ou de méthacrylate possèdent un poids moléculaire moyen de 50 000 à 300 000.

10. Utilisation selon l'une quelconque des revendications précédentes,
**caractérisée en ce que**
les homo- et/ou copolymères d'acrylate et/ou de méthacrylate possèdent une somme d'indice d'acidité et d'indice d'hydroxyle de 1 à 40, en particulier de 3 à 15 et de préférence, de 4 à 10.

11. Utilisation selon l'une quelconque des revendications précédentes,
**caractérisée en ce que**
les composés époxydique possèdent un équivalant en époxyde dans la zone de 100 à 4 000 et, en particulier, de 150 à 600.

12. Utilisation selon l'une quelconque des revendications précédentes,
**caractérisée en ce qu'**
au moins, d'une façon prépondérante, des composés époxydiques à base de bis-phénol A, de Novolak et/ou d'époxydes hétérocycliques sont inclus.

13. Utilisation selon l'une quelconque des revendications précédentes,
**caractérisée en ce qu'**
elles consistent -à côté des dispersions de résine (I) et de durcisseur (II), en des additifs usuels comme des catalyseurs, des promoteurs d'adhésion, des solvants, des promoteurs de mouillage, des agents anti-mousse, des plastifiants, jusqu'à une quantité totale de 30 % en poids rapporté à la teneur totale en solides du système réactif.

14. Utilisation selon au moins l'une quelconque des revendications 1 à 13,
**caractérisée en ce qu'**
on applique un système réactif selon les revendications 1 à 13 après mélange intime des dispersions de résine (I) et de durcisseur (II) sur le substrat par laminage, pulvérisation, étalement, raclage ou immersion et, qu'ensuite, on sèche au maximum à 120°C et qu'ainsi on produit un substrat revêtu de colle activable à la chaleur, solide en bloc à température ambiante.

15. Utilisation selon au moins l'une quelconque des revendications 1 à 13,
**caractérisée en ce qu'**
on applique le système réactif selon les revendications 1 à 13 sur au moins un des substrats à assembler, que ceux-ci sont assemblés immédiatement ensuite en surface les uns avec les autres et que le durcissement s'effectue environ de 60°C à 170°C, et qu'ainsi un produit lamifié est produit.

16. Utilisation selon l'une quelconque des revendications 1 à 14,
**caractérisée en ce que**
les substrats enduits, produits selon la revendication 14 sont assemblés en surface les uns avec les autres avec au moins un autre substrat par réactivation et durcissement subséquent du recouvrement à environ de 100°C à 170°C et qu'ainsi des produits lamifiés sont produits.

17. Utilisation du système réactif selon l'une des revendications 1 à 13, pour l'obtention de composites à plusieurs couches, en feuilles de métal, en feuilles de matière plastique, en tissus, en voiles, en papiers spéciaux et/ou en carton.

18. Utilisation du système réactif selon les revendications 1 à 13, pour l'obtention de circuits imprimés flexibles, stables aux températures élevées et de matériaux d'isolation électrique comme des enroulements de câble, des feuilles de recouvrement pour circuits et des bobinages pour self.
